# DEMANDE DE BREVET EUROPEEN

(11) **EP 2 324 969 A1**
(43) Date de publication de la demande: **25.05.2011**
(21) Numéro de dépôt: 10305918.4
(22) Date de dépôt: 26.08.2010
(51) Int. Cl.: B25J 15/02, B25J 19/00

(54) **Dispositif de préhension d'un objet par serrage, comportant un corps principal, des porte-mors articulés et des moyens d'actionnement**

(30) Priorité: 12.11.2009 FR 0957960
(71) Demandeur: DE-STA-CO France, 95108 Argenteuil Cedex (FR)
(72) Inventeur: Salet, Frédéric, 63270 Sallèdes (FR); Bertrand, Pierre, 63570 Brassac-Les-Mines (FR); Gilard, Bruno, 43100 Brioude (FR)
(74) Mandataire: De Souza, Paula

(57) **Abrégé**

La présente invention se rapporte à un dispositif de préhension (1) de type pince pour saisir un objet par serrage, notamment un produit alimentaire, comportant :
- un corps principal (2) adapté pour être monté sur un manipulateur,
- des porte-mors mobiles adaptés pour passer, par pivotement, d'une première position ouverte dans laquelle des mors sont desserrés à une deuxième position fermée dans laquelle lesdits mors sont serrés autour de l'objet à saisir, et
- des moyens d'actionnement (50), comportant un premier piston (51) solidaire d'un second piston (52) par l'intermédiaire d'une vis (53), l'ensemble étant mobile axialement en translation à l'intérieur du corps principal (2) et permettant de faire passer les porte-mors (30) de la première position à la deuxième position, et inversement,

**caractérisé en ce que** les moyens d'actionnement (50) sont disposés entièrement et se déplacent exclusivement à l'intérieur du corps principal (2), lequel est creux.

## Description

La présente invention concerne un dispositif de préhension de type pince pour saisir un objet par serrage, notamment un produit alimentaire.

Il est courant, notamment dans le domaine de l'industrie agroalimentaire, d'utiliser des pinces de ce type pour saisir des aliments en vue de les déplacer, par exemple pour les transporter, les positionner dans un récipient ou leur faire subir différentes opérations.

Dans ce domaine particulier, l'hygiène est primordiale pour ne pas polluer les aliments et il existe des normes très strictes. En effet, un mécanisme venant au contact des aliments ne doit pas contaminer ce dernier:
- ni par les matières qui le composent et/ou éventuellement les revêtements desdites matières, ce qui implique que les matières et les éventuels traitements soient aux normes;
- ni par un fluide moteur ou des lubrifiants, ce qui implique une étanchéité totale et des lubrifiants conforme aux normes;
- ni par détachement de corps étrangers, ce qui implique un minimum de pièces mécaniques pouvant se détacher;
- ni par l'accumulation et la rétention de souillures, ce qui implique de réduire les zones de contact métal considérées comme n'étant pas étanches aux bactéries.

Le mécanisme doit par ailleurs être lavé fréquemment et désinfecté à haute pression et avec des produits chimiques pouvant être corrosifs ou dangereux pour l'aliment. La pince doit donc être conçue pour ne pas être endommagée par ces lavages/désinfections et ne pas présenter de zones inaccessibles à ces opérations.

Un but de la présente invention est donc de proposer une pince répondant de manière optimale à tous ces impératifs et qui soit simple à fabriquer tant d'un point de vue interne qu'externe, fiable et facile à utiliser.

Ainsi, la présente invention a pour objet un dispositif de préhension de type pince pour saisir un objet par serrage, notamment un produit alimentaire, comportant:
- un corps principal adapté pour être monté au bout d'un manipulateur, tel qu'un portique ou un bras de robot,
- des porte-mors mobiles adaptés pour passer, par pivotement, d'une première position ouverte dans laquelle les mors sont desserrés à une deuxième position fermée dans laquelle les mors sont serrés autour de l'objet à saisir, et
- des moyens d'actionnement, comportant un premier piston solidaire d'un second piston par l'intermédiaire d'une vis, l'ensemble étant mobile axialement en translation à l'intérieur du corps principal sous l'effet de la pression exercée par un fluide de compression contenu dans une chambre d'admission du corps, et permettant de faire passer les porte-mors de la première position à la deuxième position, et inversement, par l'intermédiaire de deux leviers localement creux solidaires respectivement de chacun des porte-mors et munis d'une excroissance adaptée pour être insérée dans un logement latéral du second piston, chaque ensemble levier/porte-mors associé étant articulé sur un axe perpendiculaire à l'axe de déplacement linéaire du second piston, la translation du second piston provoquant la rotation de chaque ensemble levier/porte-mors en même temps autour de leurs axes respectifs de pivotement,
caractérisé en ce que les moyens d'actionnement sont disposés entièrement et se déplacent exclusivement à l'intérieur du corps principal, lequel est creux.

Selon des modes de réalisation préférés, l'ensemble selon la présente invention comprend l'une au moins des caractéristiques suivantes:
- le corps principal est réalisé uniquement en deux parties, un corps supérieur et un corps inférieur étanches l'un par rapport à l'autre et dépourvus de zones de rétention de souillures et/ou de fluide tel que de l'eau ou des produits de nettoyage.
- les moyens de fixation entre les corps supérieur et inférieur, de même que les moyens de fixation, de centrage et d'orientation du dispositif par rapport au manipulateur, ainsi que les arrivées de fluide de compression sont tous regroupés sur une face du corps inférieur et protégés des souillures par un joint d'étanchéité plat;
- chaque porte-mors comprend, formé d'une seule pièce, une tige pivotante se prolongeant par une tête de porte-mors munie d'une face plate de contact avec un mors de serrage;
- chaque tige pivotante est de section cylindrique et comporte une extrémité libre fraisée longitudinalement sur la moitié de son diamètre de sorte que deux porte-mors coaxiaux complémentaires s'emboîtent au niveau de l'extrémité fraisée respective de chacune des deux tiges pivotantes;
- les extrémités fraisées des tiges pivotantes d'une paire de porte-mors coaxiaux complémentaires sont maintenues entre elles à l'aide du levier qu'elles traversent;
- chaque portion creuse du levier comprend une face interne plate coopérant de manière ajustée avec un méplat ménagé sur l'extrémité libre fraisée de chaque tige pivotante, perpendiculaire au fraisage longitudinal, pour solidariser et orienter angulairement le levier par rapport à la paire de porte-mors coaxiaux complémentaires;
- le levier présente une portion creuse en forme de « C » refermé avec une fine fente de serrage procurant une élasticité audit levier, et comporte un alésage ménagée dans les deux branches du « C » pour recevoir une vis traversant des empreintes hémi cylindrique réalisées dans les partie fraisées de chaque tige pivotante, lesdites empreintes étant coaxiales et formant un orifice cylindrique une fois les deux porte-mors d'une même paire reliés l'un à l'autre;
- les zones de contact entre les corps supérieur et inférieur, et/ou entre la face plate de la tête de support et un mors, et/ou entre le corps inférieur et le manipulateur sont toutes de type métal sur métal et sont protégées des souillures respectivement par les joints plats; et
- chaque ensemble levier/paire de porte-mors est calé axialement sur deux faces parallèles opposées du levier par des collerettes de deux coussinets à collerette insérés dans un logement correspondant d'une partie du corps principal, et pivote dans lesdits coussinets.

L'invention va maintenant être décrite plus en détail en référence à des modes de réalisation particuliers donnés à titre d'illustration uniquement et représentés sur les figures annexées dans lesquelles:
- La figure 1 est une vue en perspective d'une pince alimentaire conforme à la présente invention comportant un corps principal, des porte-mors articulés et un premier type de mors;
- La figure 2 est une vue en perspective semblable à la figure 1, prise sous un autre angle et dans laquelle la pince est dépourvue de ses mors;
- La figure 3 est une vue en perspective de dessous de la figure 2;
- La figure 4 est une vue de dessus en coupe des figures 1 à 3;
- La figure 5 est une vue en perspective éclatée du corps de la pince;
- La figure 6 est une vue en coupe de la figure 1, les portes mors étant dans une première position extrême desserrée;
- La figure 7 est une vue similaire à la figure 6 mais dans laquelle les portes mors sont dans une seconde position extrême serrée;
- La figure 8 est une vue de détail des figures 6 et 7;
- La figure 9 est une vue en perspective éclatée des porte-mors des figures 1 à 8;
- La figure 10 est une vue en coupe de détail du corps principal et d'un porte-mors;
- La figure 11 est une vue de détail en coupe du corps principal;
- La figure 12 est une vue en perspective d'une variante de réalisation de la figure 1, avec un autre type de mors;
- La figure 13 est une vue en perspective semblable à la figure 12, prise sous un autre angle et dans laquelle la pince est dépourvue de ses mors;
- La figure 14 est une vue en perspective de dessous de la figure 12; et
- La figure 15 est une vue en perspective éclatée des porte-mors des figures 12 à 14.

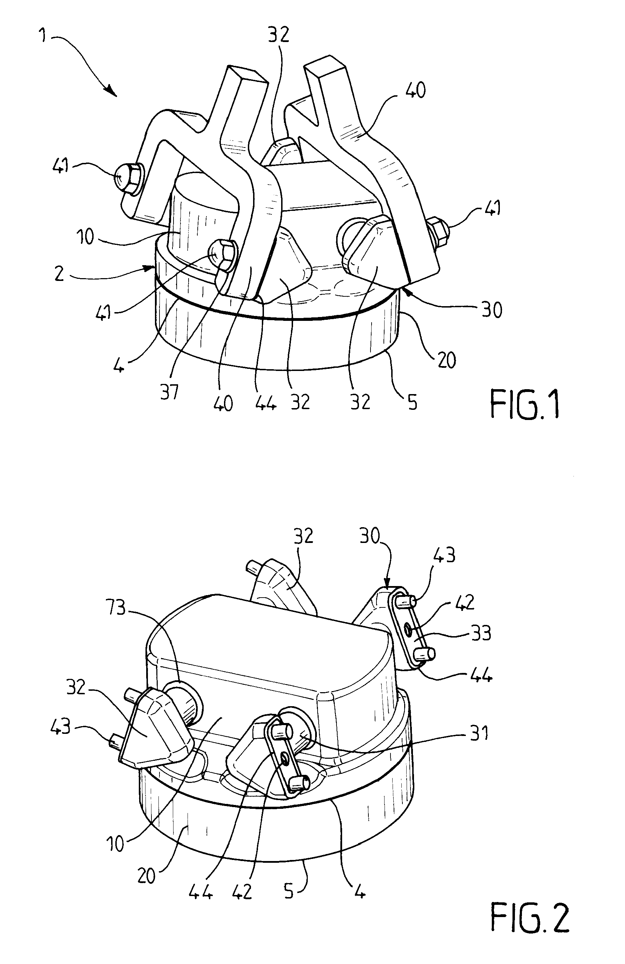

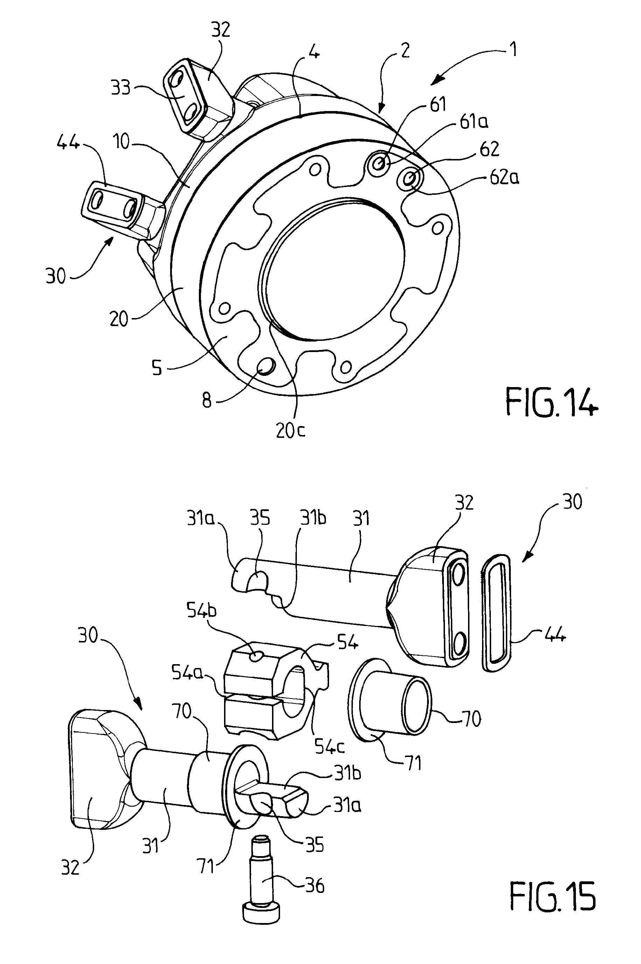

Une pince alimentaire 1 conforme à la présente invention est représentée sur les figures 1 à 15.

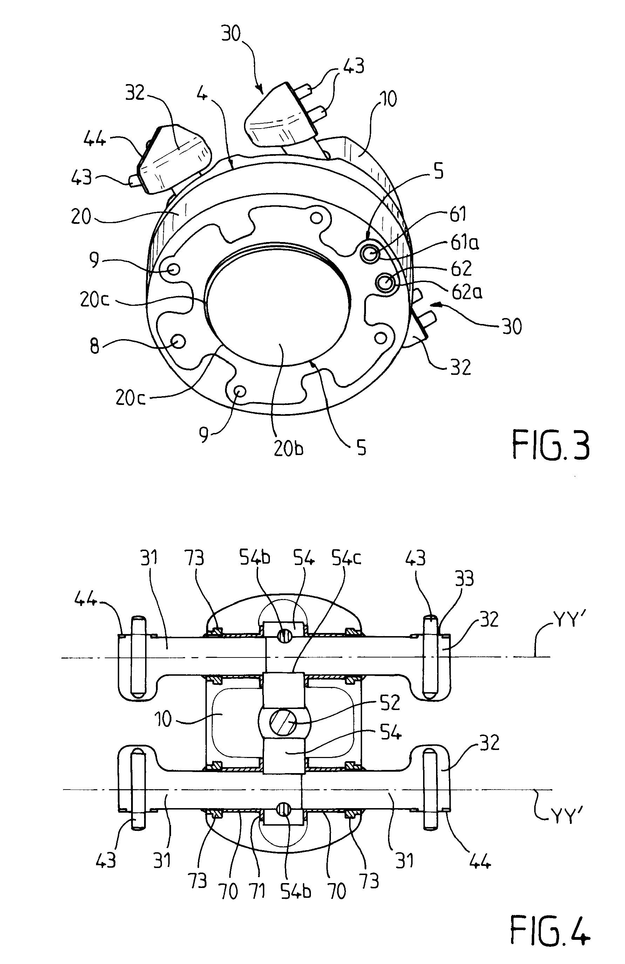

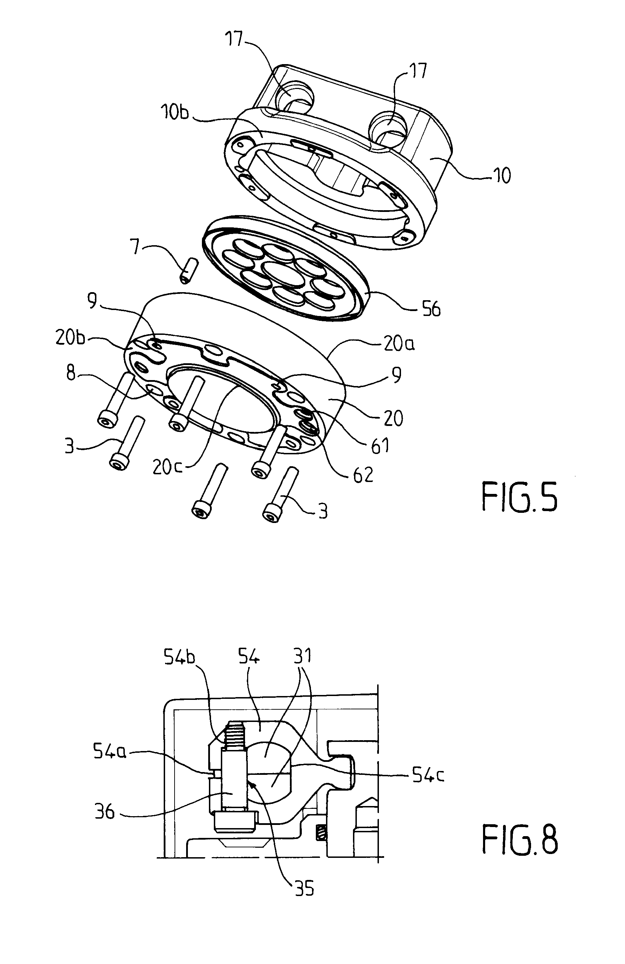

Selon un premier mode de réalisation illustré par les figures 1 à 11, la pince 1 comporte un corps principal 2 réalisé en seulement deux parties, un corps supérieur 10 et un corps inférieur 20, orientés angulairement par une goupille 7. Ce corps principal 2 est étanche et adapté pour être monté sur un manipulateur motorisé, par exemple à l'extrémité d'un bras de robot ou sur un portique mobile, à l'aide de taraudages 9 prévus dans le corps inférieur 20. Le centrage de la pince 1 sur le manipulateur est également possible par l'intermédiaire d'une partie centrale bombée 20c de la face inférieure 20b et un piétage 8 pour l'orientation de la pince 1 est également prévu dans le corps inférieur 20 (voir figures 3 et 5).

Les corps supérieur 10 et inférieur 20 du corps principal 2, touts deux dépourvus de zones de rétention de fluide (huile, eau, produit de nettoyage) et de souillures, sont fixés entre eux à l'aide de vis 3 réparties par exemple selon un cercle sur une surface inférieure 20b du corps inférieur 20.

Comme cela est visible sur la figure 5, un joint plat d'étanchéité 4 est placé entre les corps 10 et 20, plus précisément entre une surface supérieure 20a du corps inférieur 20 et une surface inférieure 10b du corps supérieur 10. Un autre joint d'étanchéité plat 5 est également placé sous la face inférieure 20b du corps inférieur 20 pour la liaison de la pince 1 avec le manipulateur. Ce joint 5 recouvre de manière étanche les vis 3 et les orifices ménagés dans le corps inférieur 20 pour les recevoir.

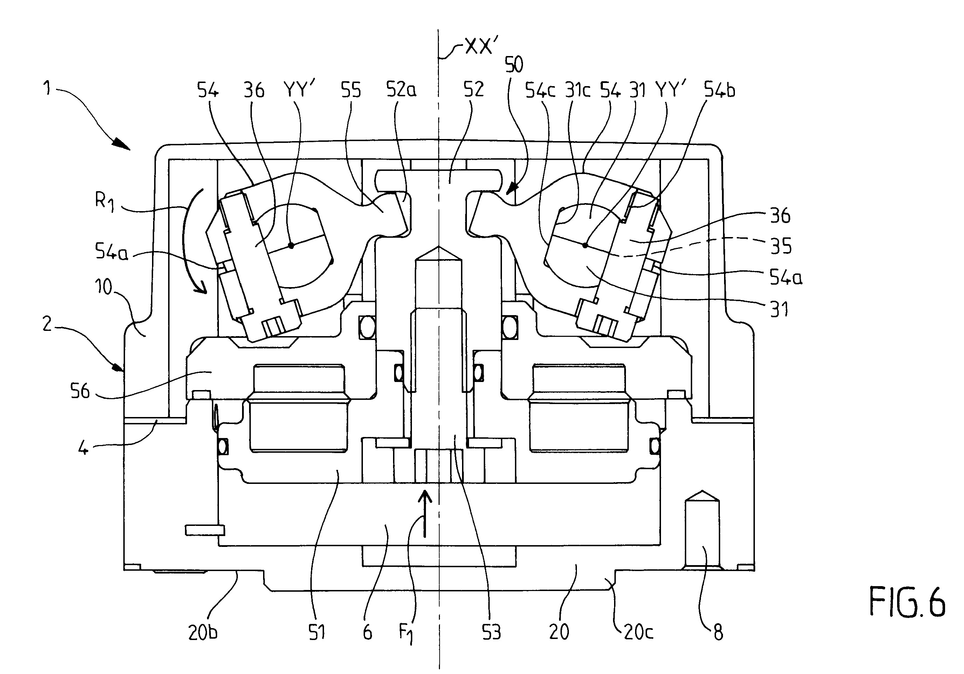

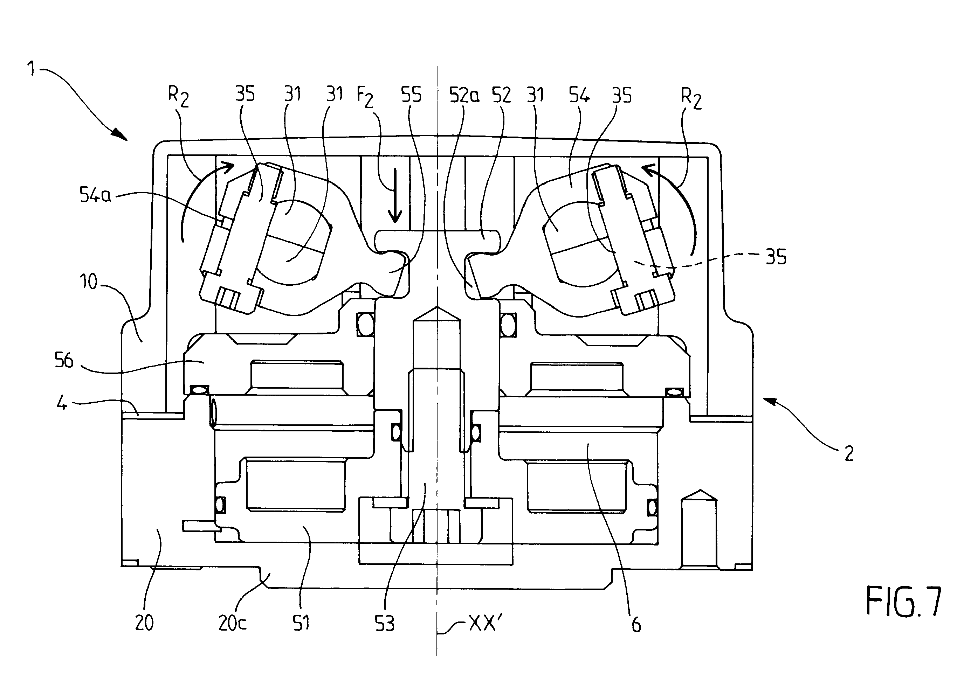

La pince 1 comporte également des porte-mors mobiles 30 adaptés pour passer, par pivotement, d'une première position extrême ouverte dans laquelle des mors 40 sont desserrés (figure 6) à une seconde position extrême fermée dans laquelle lesdits mors 40 sont serrés autour de l'objet à saisir (figure 7).

Les mors de serrage 40, destinés à saisir le produit alimentaire, sont fixés sur les porte-mors 30 grâce à une vis 41 présentant un joint de tête 37 et coopérant avec un orifice taraudé 42 de chaque porte-mors 30, et des goupilles de centrage 43 disposées de part et d'autre dudit orifice taraudé 42. Ainsi, la pince 1 comporte deux paires de porte-mors 30 articulés, chaque paire portant un mors 40.

Le corps principal 2 de la pince 1 renferme des moyens d'actionnement 50 pour le déplacement des porte mors 30 entre les deux positions extrêmes.

Plus précisément, ces moyens d'actionnement 50 sont disposés entièrement, et se déplacent exclusivement, à l'intérieur du corps principal 2, lequel est creux.

Comme cela est visible en détail notamment sur les figures 6 et 7, les moyens d'actionnement 50 comportent un premier piston 51 solidaire d'un second piston 52 par l'intermédiaire d'une vis 53. Cet ensemble est mobile axialement en translation (axe XX') de manière étanche à l'intérieur du corps principal 2 sous l'effet de la pression exercée par un fluide de compression contenu dans une chambre d'admission 6 du corps inférieur 20 du corps 2, et permet de faire passer les porte-mors 30 de la première position (figure 6) à la deuxième position (figure 7), et inversement. Une rondelle intérieure intermédiaire 56, représentée notamment sur la figure 5, est coincée entre les deux corps 10 et 20 et sert à fermer la chambre d'admission 6 en créant une étanchéité à la fois sur le corps inférieur 20 et sur le second piston 52.

A cet effet, les moyens d'actionnement 50 comportent également, comme cela est visible en particulier sur les figure 6 à 8, deux leviers localement creux 54 solidaires respectivement de chacun des porte-mors 30 et munis d'une excroissance 55 adaptée pour être insérée dans un logement latéral 52a du second piston 52, chaque ensemble levier 54/porte-mors 30 associé étant articulé sur un axe YY' perpendiculaire à l'axe de déplacement linéaire XX' du second piston 52 (voir figure 4).

Ainsi, comme cela est illustré par les figures 6 et 7, la translation du second piston 52 selon l'axe XX' (flèche F1 ou F2), provoquée par la translation du premier piston 51 qui lui est solidaire, entraîne la rotation de chaque ensemble levier 54/porte-mors 30 (flèches R1 ou R2) en même temps autour de leurs axes respectifs longitudinal de pivotement YY' du fait de la coopération entre l'excroissance 55 et le logement 52a. Cela permet de serrer ou desserrer les mors 40 autour de l'aliment à saisir/lâcher.

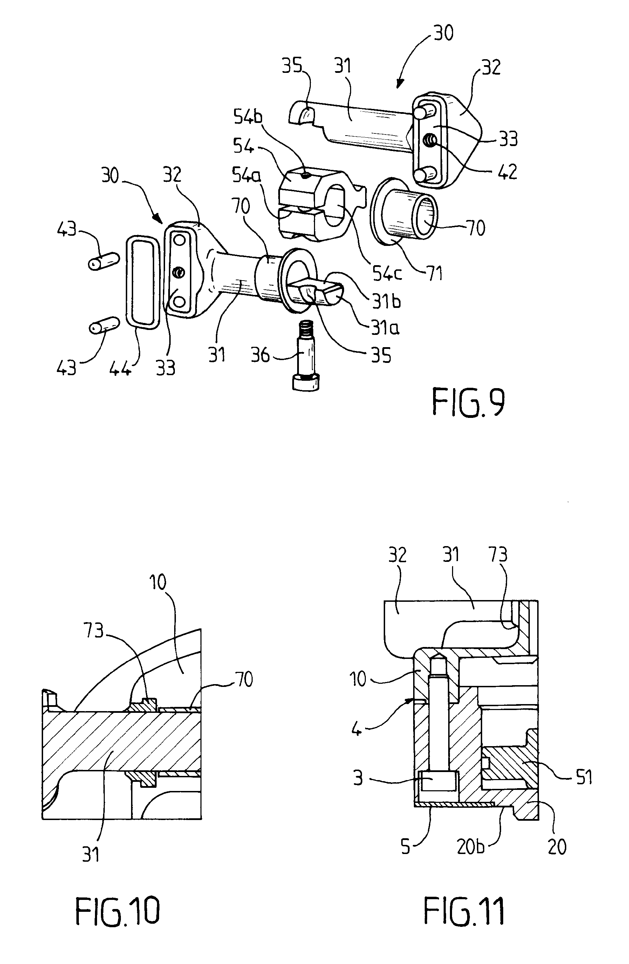

Comme l'illustre la figure 9, chaque porte-mors 30 comprend, formés d'une seule pièce, une tige pivotante 31 se prolongeant par une tête 32 de porte-mors munie d'une face plate 33 de contact avec un mors de serrage 40 sur laquelle repose un joint plat ovale d'étanchéité 44.

Chaque tige pivotante 31 est de section cylindrique et comporte une extrémité libre 31a muni d'un fraisage longitudinal 31b sur la moitié de son diamètre de sorte que deux porte-mors coaxiaux complémentaires 30 s'emboîtent au niveau de l'extrémité fraisée respective 31a de chacune des deux tiges pivotantes 31, lesquelles sont alors dans le prolongement exact l'une de l'autre (voir figure 4).

Les extrémités fraisées 31a des tiges pivotantes 31 d'une paire de porte-mors coaxiaux complémentaires 30 sont maintenues entre elles à l'aide du levier 54 qu'elles traversent.

Pour cela, comme cela est illustré par la vue éclatée en perspective de la figure 9, le levier 54 présente une forme de « C » refermé avec une fine fente de serrage 54a procurant une élasticité audit levier, et comporte un alésage 54b ménagée dans les deux branches du « C » pour recevoir une vis 36 traversant des empreintes hémi cylindrique 35 réalisées dans les partie fraisées 31b de chaque tige pivotante 31, lesdites empreintes 35 étant coaxiales une fois les deux porte-mors 30 d'une même paire reliés l'un à l'autre.

Chaque ensemble levier 54/paire de porte-mors 30 est également calé axialement sur deux faces parallèles opposées du levier 54 par des collerettes 71 appartenant à deux coussinets 70 insérés dans un logement correspondant 17 du corps supérieur 10 du corps principal 2 (voir figure 5), et pivote dans lesdits coussinets 70. Des joints racleurs à lèvre 73 permettent également l'étanchéité entre les tiges 31 et les orifices 17 du corps supérieur 10, ces joints étant calés dans le logement 17 du corps 10.

Chaque portion creuse d'un des leviers 54 comprend une face interne plate 54c coopérant de manière ajustée avec un méplat 31c ménagé sur l'extrémité libre fraisée 31a de chaque tige pivotante 31, ledit méplat étant disposé perpendiculairement au fraisage longitudinal 31b. Ceci permet de solidariser et orienter angulairement le levier 54 par rapport à la paire de porte-mors coaxiaux complémentaires 30.

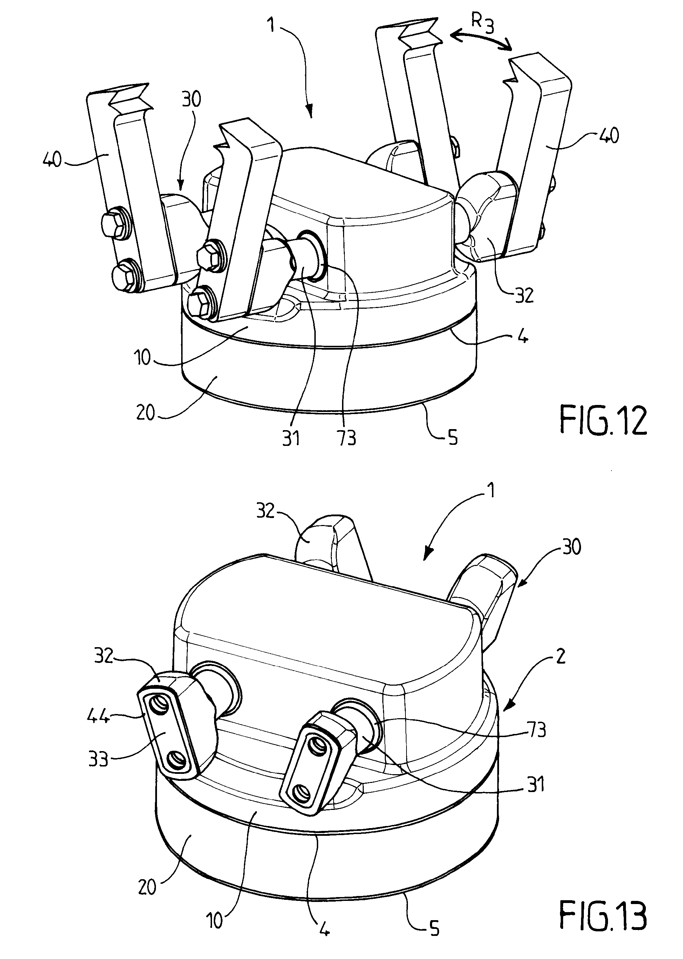

Selon le mode de réalisation illustré par les figures 12 à 15, la pince 1 comporte des mors 40 d'un autre type montés sur des porte-mors 30 dont la face 33 de la tête 32 est orientée différemment. En effet, sur les figures 1 à 13, les faces 33 sont « dos à dos » et perpendiculaires à l'axe longitudinal de rotation YY' des tiges 31, tandis que sur les figures 13 à 16, les faces 33 sont dans le prolongement axial de ces tiges et sont toutes parallèles entre elles (dans une même paire de porte-mors 30 et d'une paire à l'autre).

Le fonctionnement de cette pince 1 est identique. La translation des pistons 51 et 52 provoque la rotation des leviers et donc des porte-mors 30 pour serrer ou desserrer les mors 40.

Il est également intéressant de noter que les différentes zones de contact entre les corps supérieur 10 et inférieur 20, entre la face plate 33 de la tête 32 de porte-mors 30 et un mors 40, et entre le corps inférieur 20 et le manipulateur sont toutes de type métal sur métal et sont protégées des souillures respectivement par les joints plats 4, 44 et 5.

Comme cela est visible sur les figures 3, 5 11 et 14, les vis de fixation 3 entre les corps supérieur 10 et inférieur 20, de même que les moyens 8 et 9 de fixation, de centrage et d'orientation du dispositif par rapport au manipulateur, ainsi que des arrivées/sorties de fluide de compression 61 et 62 et leurs joints toriques d'étanchéités associés 61a et 62a sont regroupés sur la face inférieure 20b du corps inférieur 20 et protégés des souillures par un joint d'étanchéité plat 5.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, la forme des mors 40 peut différer, de même que celle des porte-mors 30.

Des ressorts de sécurité peuvent être ajoutés, par exemple au sein de la chambre d'admission de fluide 6. Ces ressorts permettent de garantir la tenue des pièces entre les mors serrés en cas de coupure de l'alimentation du fluide sous pression, et également d'augmenter les forces de serrage à la fermeture. Il est donc possible d'ajouter un ressort pour l'ouverture et/ou pour la fermeture.

Des moyens de détection de la course des pistons 51 et 52 peuvent également être incorporés dans le corps principal 2, par exemple dans la chambre d'admission 6. Ainsi, un potentiomètre linéaire à sorties analogiques, totalement intégré, pourra être ajouté, par exemple en plaçant le corps fixe du capteur dans le corps inférieur 20, la tige dudit capteur étant entraînée par le piston 52, et les sorties étant rendues étanches selon les normes agroalimentaires.

## Revendications

1. Dispositif de préhension (1) de type pince pour saisir un objet par serrage, notamment un produit alimentaire, comportant:
- un corps principal (2) adapté pour être monté au bout d'un manipulateur, tel qu'un portique ou un bras de robot,
- des porte-mors mobiles (30) adaptés pour passer, par pivotement, d'une première position ouverte dans laquelle des mors (40) sont desserrés à une deuxième position fermée dans laquelle lesdits mors (40) sont serrés autour de l'objet à saisir, et
- des moyens d'actionnement (50), comportant un premier piston (51) solidaire d'un second piston (52) par l'intermédiaire d'une vis (53), l'ensemble étant mobile axialement en translation à l'intérieur du corps principal (2) sous l'effet de la pression exercée par un fluide de compression contenu dans une chambre d'admission (6) du corps (2), et permettant de faire passer les porte-mors (30) de la première position à la deuxième position, et inversement, par l'intermédiaire de deux leviers (54) localement creux solidaires respectivement de chacun des porte-(30) mors et munis d'une excroissance (55) adaptée pour être insérée dans un logement latéral (52a) du second piston (52), chaque ensemble levier (54)/porte-mors (30) associé étant articulé sur un axe (YY') perpendiculaire à l'axe (XX') de déplacement linéaire des pistons (51, 52), la translation du second piston (52) provoquant la rotation de chaque ensemble levier (54)/porte-mors (30) en même temps autour de leurs axes respectifs de pivotement (YY'),
**caractérisé en ce que** les moyens d'actionnement (50) sont disposés entièrement et se déplacent exclusivement à l'intérieur du corps principal (2), lequel est creux.

2. Dispositif selon la revendication 1, **caractérisé en ce que** le corps principal (2) est réalisé uniquement en deux parties, un corps supérieur (10) et un corps inférieur (20) étanches l'un par rapport à l'autre et dépourvus de zones de rétention de souillures et/ou de fluide tel que de l'eau ou des produits de nettoyage.

3. Dispositif selon l'une quelconque des revendications précédentes, **caractérisé en ce qu'**il comporte des moyens de fixation (3) entre les corps supérieur (10) et inférieur (20), de moyens (8, 9) de fixation, de centrage et d'orientation du dispositif par rapport au manipulateur, ainsi que des arrivée/sortie (61, 62) de fluide de compression, tous/toutes étant regroupés sur une face inférieure (20b) du corps inférieur (20) et protégés des souillures par un joint d'étanchéité plat (5).

4. Dispositif selon l'une quelconque des revendications précédentes, **caractérisé en ce que** chaque porte-mors (30) comprend, formé d'une seule pièce, une tige pivotante (31) se prolongeant par une tête (32) de porte-mors (30) munie d'une face plate de contact (33) avec un mors de serrage (40).

5. Dispositif selon la revendication 4, **caractérisé en ce que** chaque tige pivotante (31) est de section cylindrique et comporte une extrémité libre (31a) munie d'un fraisage longitudinale (31b) sur la moitié de son diamètre de sorte que deux porte-mors coaxiaux complémentaires (30) s'emboîtent au niveau de l'extrémité fraisée (31a) respective de chacune des deux tiges pivotantes (31).

6. Dispositif selon la revendication 5, **caractérisé en ce que** les extrémités fraisées (31a) des tiges pivotantes (31) d'une paire de porte-mors coaxiaux complémentaires (30) sont maintenues entre elles à l'aide du levier (54) qu'elles traversent.

7. Dispositif selon la revendication 6, **caractérisé en ce que** chaque portion creuse du levier (54) comprend une face interne plate (54c) coopérant de manière ajustée avec un méplat (31c) ménagé sur l'extrémité libre fraisée (31a) de chaque tige pivotante (31), perpendiculaire au fraisage longitudinal (31b), pour solidariser et orienter angulairement le levier (54) par rapport à la paire de porte-mors coaxiaux complémentaires (30).

8. Dispositif selon la revendication 7, **caractérisé en ce que** le levier (54) présente une portion creuse en forme de « C » refermé avec une fine fente de serrage (54a) procurant une élasticité audit levier, et comporte un alésage (54b) ménagée dans les deux branches du « C » pour recevoir une vis (36) traversant des empreintes hémi cylindrique (35) réalisées dans les extrémités fraisées (31a) de chaque tige pivotante (31), lesdites empreintes (35) étant coaxiales une fois les deux porte-mors (30) d'une même paire reliés l'un à l'autre.

9. Dispositif selon l'une quelconque des revendications 4 à 8, **caractérisé en ce que** les zones de contact entre les corps supérieur (10) et inférieur (20), et/ou entre la face plate (33) de la tête de support (32) et un mors (40), et/ou entre le corps inférieur (20) et le manipulateur sont toutes de type métal sur métal et sont protégées des souillures respectivement par des joints plats (4, 44, 5).

10. Dispositif selon l'une quelconque des revendications précédentes, **caractérisé en ce que** chaque ensemble levier (54)/paire de porte-mors (30) est calé axialement sur deux faces parallèles opposées du levier par des collerettes (71) de deux coussinets (70) à collerette insérés dans un logement (17) correspondant d'une partie du corps principal, et pivote dans lesdits coussinets.
